# EUROPÄISCHE PATENTSCHRIFT

(11) **EP 1 203 457 B1**
(45) Veröffentlichungstag und Bekanntmachung des Hinweises auf die Patenterteilung: **04.02.2004**
(21) Anmeldenummer: 00960425.7
(22) Anmeldetag: 09.08.2000
(51) Int. Cl.: H04B 3/23, H04B 3/20

(54) **EMPFANGSVERFAHREN UND EMPFÄNGERANORDNUNG FÜR EIN DUPLEX-ÜBERTRAGUNGSSYSTEM**
RECEPTION METHOD AND RECEIVER ARRAY FOR A DUPLEX TRANSMISSION SYSTEM
PROCEDE DE RECEPTION ET DISPOSITIF RECEPTEUR POUR UN SYSTEME DE TRANSMISSION DUPLEX

(30) Priorität: 09.08.1999 DE 19937505
(43) Veröffentlichungstag der Anmeldung: 08.05.2002
(73) Patentinhaber: Infineon Technologies AG, 81669 München (DE)
(72) Erfinder: SCHENK, Heinrich, 81476 München (DE)
(74) Vertreter: Reinhard - Skuhra - Weise & Partner
(86) Internationale Anmeldenummer: PCT/EP2000/007746
(87) Internationale Veröffentlichungsnummer: WO 2001/011796

(56) Entgegenhaltungen:
- DD-A- 211 029
- US-A- 5 163 044

## Beschreibung

Die vorliegende Erfindung betrifft ein Empfangsverfahren nach dem Oberbegriff des Anspruches 1 und eine Empfängeranordnung nach dem Oberbegriff des Anspruches 4 für ein Duplex-Übertragungssystem, in dem insbesondere pulsamplitudenmodulierte Signale übertragen werden.

Die Übertragung von Daten im Basisband mit Hilfe einer Pulsamplitudenmodulation (PAM) ist insbesondere dann vorteilhaft, wenn nicht gleichzeitig im niederfrequenten Bereich zusätzliche Signale, wie beispielsweise für einen zusätzlichen Telefonkanal Sprachsignale, übertragen werden müssen. Im Gegensatz zu trägermodulierten Übertragungssystemen, wie beispielsweise
QAM (Quadraturamplitudenmodulation)- oder DMT (Diskrete Multitonmodulation)-Übertragungssystemen, wird in PAM-Übertragungssystemen nahezu der gesamte Frequenzbereich beginnend bei einer unteren Grenzfrequenz, die im wesentlichen durch die Eigenschaften der Leitungsanschaltung bestimmt wird, genutzt.

Die Pulsamplitudenmodulation wird u.a. auch in Duplex-Übertragungssystemen eingesetzt, bei denen gleichzeitig in beide Richtungen des Übertragungskanals bzw. der Übertragungsleitung Daten übertragen werden. In derartigen Duplex-Übertragungssystemen ist zur Unterdrückung des Übersprechens vom eigenen Sender auf den Empfänger derselben Übertragungseinheit, was zu Echoeffekten führen würde, eine Echokompensation erforderlich. Durch die Echokompensation wird gleichzeitig erreicht, daß die zur Verfügung stehende Bandbreite beidseitig optimal genutzt werden kann, so daß sich derartige Übertragungssysteme bei einer vorgegebenen Störumgebung insbesondere durch eine relativ hohe Reichweite auszeichnen.

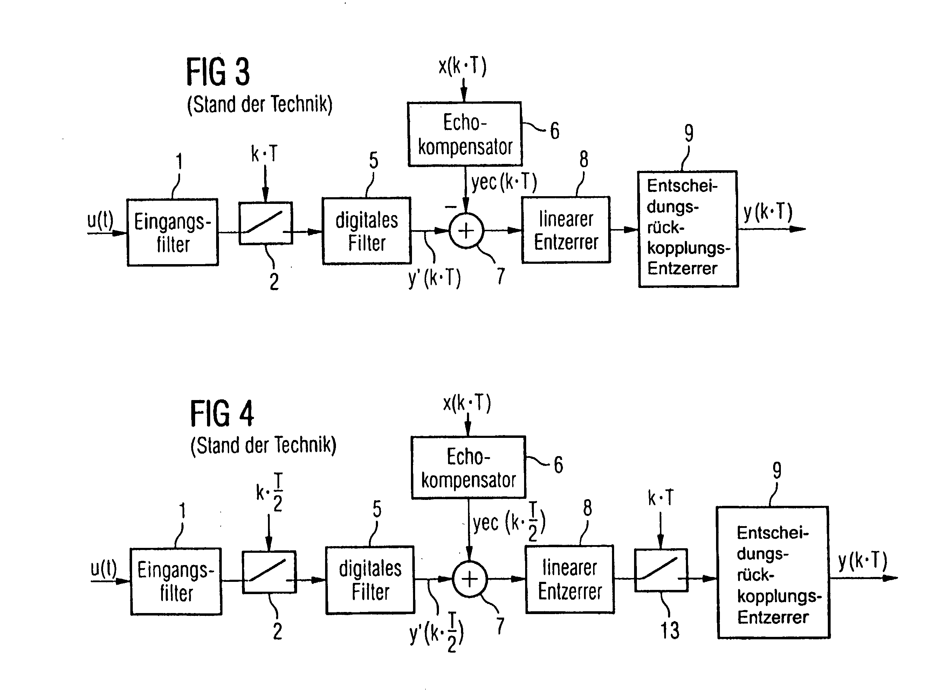

In Fig. 3 ist die prinzipielle Anordnung eines PAM-Empfängers eines derartigen Duplex-Datenübertragungssystems dargestellt. Ein Empfangssignal u(t) wird von einem analogen Eingangsfilter 1 gefiltert und anschließend von einem Abtaster 2 mit der Symbolrate 1/T abgetastet, so daß diese Abtastwerte des Empfangssignals in Abständen von *k·T* vorliegen. Anstelle des analogen Eingangsfilters 1 kann auch ein digitales Eingangsfilter verwendet werden, wenn die Abtastfrequenz entsprechend hoch gewählt wird. Nach der Abtastung mit der Symbolrate 1/T kann sich eine weitere Filterstufe 5 anschließen, die im allgemeinen durch ein digitales Hochpaßfilter realisiert ist. Dieses weitere Filter 5 dient insbesondere zur Unterdrückung von niederfrequenten Störungen, wie z.B. Offset, und zur Verbesserung des Einschwingverhaltens. Von einem Echokompensator 6 wird in Abhängigkeit von den Sendedaten *x*(*k·T*) des Senders derselben Duplex-Übertragungseinheit ein Echokompensationssignal *yec*(*k·T*) erzeugt und über den in Fig. 3 gezeigten Addierer 7 von dem abgetasteten und entzerrten Empfangssignal *y'*(*k·T*) subtrahiert. Das auf diese Weise echokompensierte Empfangssignal wird abschließend entzerrt und als *y*(*k·T*) zur weiteren Verarbeitung, insbesondere zur Demodulation, ausgegeben, so daß die jeweils übertragenen Daten wiedergewonnen werden können. Als linearer Entzerrer 8 wird in der Regel ein digitales nichtrekursives Filter verwendet, dessen Koeffizienten jeweils adaptiv auf den aktuellen Übertragungskanal eingestellt werden müssen. Da dem Entzerrer 8 die mit der Symbolrate 1/T abgetasteten, gefilterten und vom Echo befreiten Empfangssignalwerte als Eingangssignal zugeführt werden, wird der Entzerrer 8 auch als T-Entzerrer bezeichnet. Nach dem Entzerrer 8 wird üblicherweise zusätzlich ein Entscheidungs-Rückkopplungsentzerrer 9 (Decision-Feedback-Entzerrer) eingesetzt, der die Nachschwinger der Impulsantwort des jeweiligen Übertragungskanals kompensiert und in der Regel zu einem bsseren Übertragungsverhalten führt.

In vielen Anwendungsfällen kann bei derselben Störumgebung ein besseres Übertragungsverhalten erzielt werden, wenn ein Entzerrer verwendet wird, dessen Eingangssignal mit der doppelten Symbolrate des Empfangssignals, d.h. mit der Frequenz 2/T, abgetastet wird. Ein derartiger Entzerrer wird daher auch als T/2-Entzerrer bezeichnet.

Eine entsprechende Empfängeranordnung mit einem derartigen T/2-Entzerrer ist in Fig. 4 dargestellt, wobei diejenigen Bestandteile, welche den in Fig. 3 gezeigten Bestandteilen entsprechen, mit denselben Bezugszeichen versehen sind. Wie aus Fig. 4 ersichtlich ist, wird das Empfangssignal u(t) von dem Abtaster 2 mit der doppelten Symbolrate 2/T abgetastet und über das digitale Hochpaßfilter 5 dem Echokompensator 6 zugeführt. Aufgrund der doppelten Abtastfrequenz muß in diesem Fall der Echokompensator je Empfangssymbol zwei Kompensationswerte *y*(*k*·*T*/2) erzeugen. Das somit echokompensierte Empfangssignal wird dem T/2-Entzerrer 8 zugeführt und am Ausgang des T/2-Entzerrers durch einen weiteren Abtaster 13 mit der einfachen Symbolrate 1/T abgetastet und an den Entscheidungs-Rückkopplungentzerrer 9 ausgegeben.

Der wesentliche Nachteil dieser Empfängeranordnung besteht darin, daß der Echokompensator 6, wie bereits erläutert worden ist, je Empfangssymbol zwei Kompensationswerte, d.h. doppelt soviele Kompensationswerte wie bei der in Fig. 3 gezeigten Anordnung, erzeugen muß. Aus diesem Grund wird der Realisierungsaufwand für den Echokompensator 6, der ohnehin den Hauptanteil des Gesamtaufwands darstellt, nahezu verdoppelt.

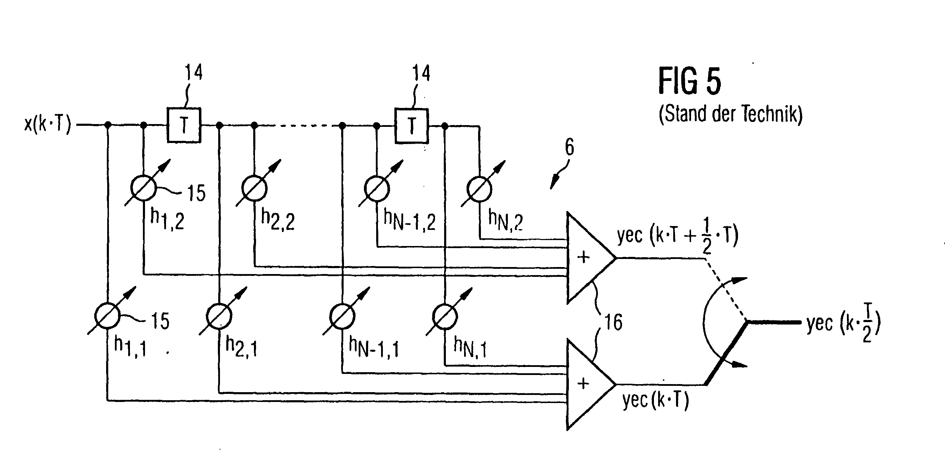

Dies soll durch die in Fig. 5 gezeigte Darstellung verdeutlicht werden, wobei eine mögliche Schaltungsanordnung des in Fig. 4 gezeigten Echokompensators 6 für ein Übertragungssystem mit einem T/2-Entzerrer 8 dargestellt ist. Der Echokompensator 6 besteht im wesentlichen aus zwei Zweigen, wobei der obere Zweig die Anteile des Echokompensationssignals *yec*(*k·T*) für die Abtastzeitpunkte *k·T*+*T*/2 und der untere Zweig die Anteile des Echokompensationssignals für die Abtastzeitpunkte *k·T* generiert. Die durch die beiden Zweige mit Hilfe von Verzögerungsgliedern 14, Multiplizierer 15 mit einstellbaren Multiplikationskoeffizienten h_{1,1}...h_{N,1} bzw. h_{1,2}...h_{N,2} und Addierern 16 generierten Kompensationswerte werden ausgangsseitig abwechselnd weitergegeben. Ein Echokompensator für ein Übertragungssystem mit einem T-Entzerrer würde hingegen lediglich einen Zweig benötigen, da dann je Empfangssymbol nur ein Kompensationswert generiert werden müßte.

Aus der Patentschrift DD 211 029 sind ein gattungsgemäßes Empfangsverfahren zur Duplex-Übertragung und eine gattungsgemäße zugehörige Empfängeranordnung, die ein Empfangssignal vor der Echokompensation und Entzerrung mit der doppelten Symbolrate des Empfangssignals abtasten, entsprechend dem Oberbegriff des Anspruchs 1 bzw. 4 bekannt.

Die DE 30 09 450 A1 offenbart eine Echoausgleichsanordnung für homochrone Datenübertragungssysteme, wobei eine Abtastung des Empfangssignals auch mit der einfachen Symbolrate, allerdings erst nach der Echokompensation, durchgeführt wird.

Aus "Adaptive Sprecherecho-Kompensation in Modems für die Duplex-Datenübertragung im Fernsprechnetz", Frequenz 6/1983, S. 145 - 153, ist ebenfalls je eine Abtastung vor und nach der Echokompensation bekannt.

Die DE 38 28 623 C2 offenbart ein Verfahren zur Erzeugung von Phasenverschiebungen für die Phasenmodulation oder -tastung oder Quadraturamplitudenmodulation.

Der vorliegenden Erfindung liegt daher die Aufgabe zugrunde, ein Empfangsverfahren für ein Duplex-Übertragungssystem sowie eine entsprechende Empfängeranordnung vorzuschlagen, wobei vergleichbare Übertragungseigenschaften wie bei der Verwendung eines T/2-Entzerrers erzielt werden können und gleichzeitig jedoch der erhöhte Realisierungsaufwand für den Echokompensator vermieden wird.

Diese Aufgabe wird erfindungsgemäß durch ein Verfahren mit den Merkmalen des Anspruches 1 bzw. eine Empfängeranordnung mit den Merkmalen des Anspruches 4 gelöst. Die Unteransprüche definieren jeweils bevorzugte und vorteilhafte Ausführungsformen der vorliegenden Erfindung. Anspruch 10 gibt eine Verwendung der Empfängeranordnung für ein Duplex-Pulsamplitudenmodulations-Übertragungssystem.

Erfindungsgemäß wird vorgeschlagen, das Empfangssignal zunächst mit der doppelten Symbolrate abzutasten und einem zusätzlichen Entzerrer, nämlich einem T/2-Entzerrer, zuzuführen. Am Ausgang dieses zusätzlichen Entzerrers wird das entzerrte Empfangssignal mit der Symbolrate abgetastet, so daß lediglich jeder zweite Wert dem Echokompensator zugeführt und zur weiteren Verarbeitung verwendet wird.

Die weiteren Bestandteile der Empfängeranordnung können dann der in Fig. 3 gezeigten Anordnung mit T-Entzerrer entsprechen.

Als zusätzlicher Entzerrer kann insbesondere ein digitales nichtrekursives Filter verwendet werden, welches am Eingang mit den Empfangssignalwerten beaufschlagt wird, die mit der doppelten Symbolrate des Empfangssignals vorliegen, wobei das digitale nichtrekursive Filter am Ausgang Empfangssignalwerte mit der einfachen Symbolrate ausgibt. Die Koeffizienten des digitalen nichtrekursiven Filters dürfen sich dabei während einer Datenübertragung nicht ändern und sollten daher fest eingestellt werden.

Der Vorteil der vorliegenden Erfindung besteht darin, daß der zur Echokompensation verwendete Echokompensator lediglich einen Kompensationswert je Empfangssymbol, welches von dem zusätzlichen Entzerrer ausgegeben wird, generieren muß und somit mit relativ geringem Schaltungsaufwand realisiert werden kann. Insbesondere ist der Realisierungsaufwand vergleichbar mit demjenigen eines Echokompensators für ein Duplex-Übertragungssystem mit einem T-Entzerrer (vgl. Fig. 3). Andererseits kann mit Hilfe der vorliegenden Erfindung ein so gutes Übertragungsverhalten erzielt werden, welches vergleichbar mit demjenigen eines Systems mit einem T/2-Entzerrer ist.

Die vorliegende Erfindung eignet sich insbesondere zum Einsatz in Duplex-PAM-Datenübertragungssystemen. Grundsätzlich kann die vorliegende Erfindung jedoch auch in beliebigen anderen Duplex-Übertragungssystemen eingesetzt werden.

Die Erfindung wird nachfolgend anhand eines bevorzugten Ausführungsbeispiels unter Bezugnahme auf die beigefügte Zeichnung näher erläutert.

Fig. 1 zeigt ein Blockschaltbild einer Empfängeranordnung für ein Duplex-Übertragungssystem gemäß der vorliegenden Erfindung,
Fig. 2 zeigt einen möglichen Schaltungsaufbau für einen in

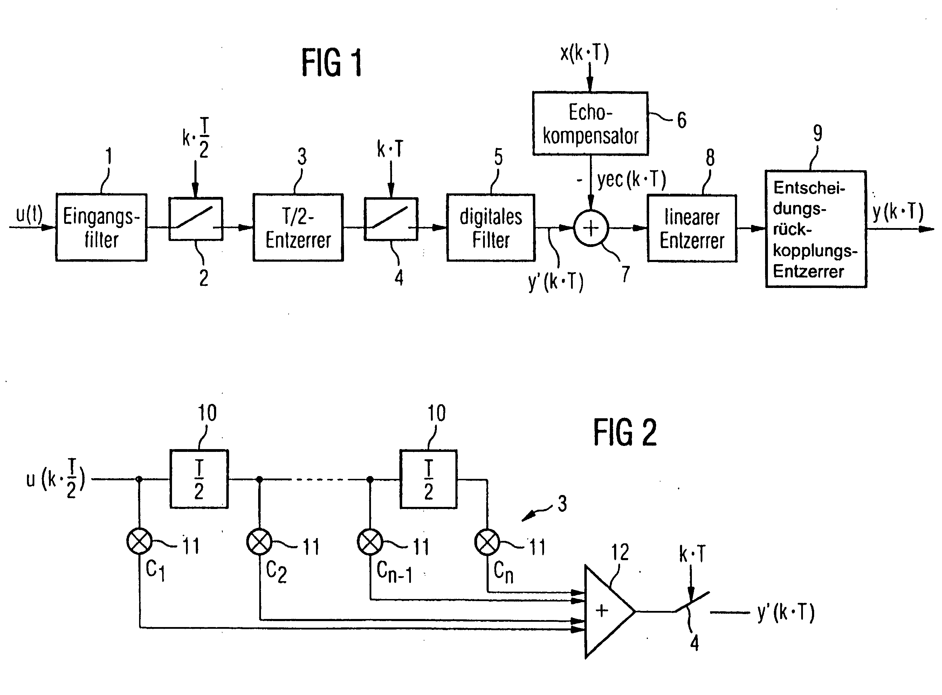

Fig. 1 gezeigten T/2-Entzerrer,
Fig. 3 zeigt ein Blockschaltbild einer bekannten Empfängeranordnung für ein Duplex-Übertragungssystem gemäß dem Stand der Technik,
Fig. 4 zeigt ein Blockschaltbild einer weiteren bekannten Empfängeranordnung für ein Duplex-Übertragungssystem gemäß dem Stand der Technik, und
Fig. 5 zeigt einen möglichen Schaltungsaufbau für einen in Fig. 4 gezeigten Echokompensator.

In Fig. 1 ist eine erfindungsgemäße Empfängeranordnung für ein Duplex-PAM-Datenübertragungssystem dargestellt, wobei die den in Fig. 3 und 4 gezeigten Bestandteilen entsprechenden Bestandteile mit denselben Bezugszeichen versehen sind.

Wie in Fig. 1 gezeigt ist, wird ein Empfangssignal u(t) zunächst mit Hilfe eines (analogen oder digitalen) Eingangsfilters 1 gefiltert und durch einen Abtaster 2 mit dem doppelten Symboltakt oder der doppelten Symbolrate des Empfangssignals abgetastet. Dieses Abtastsignal wird einer zusätzlich eingefügten Einheit, nämlich einem T/2-Entzerrer 3, der auch als Kompromißentzerrer bezeichnet werden kann, zugeführt. Mit Hilfe eines weiteren Abtasters 4, der das entzerrte Empfangssignal mit der einfachen Symbolrate abtastet, wird am Ausgang dieses zusätzlichen T/2-Entzerrers 3 nur jeder zweite Abtastwert für die weitere Verarbeitung übernommen. Die restliche Schaltungsanordnung entspricht der bekannten Schaltungsanordnung mit T-Entzerrer, wie sie in Fig. 3 gezeigt und bereits ausführlich erläutert worden ist. Ergänzend wird daher bezüglich der weiteren Bestandteile der in Fig. 1 gezeigten Empfängeranordnung auf die Ausführungen zu Fig. 3 verwiesen.

Zu beachten ist insbesondere, daß der in Fig. 1 gezeigte Echokompensator lediglich einen Kompensationswert je Symbol generieren muß und somit mit entsprechend geringem Aufwand realisiert werden kann.

Der gemäß Fig. 1 verwendete T/2-Entzerrer 3 kann insbesondere durch ein digitales nichtrekursives Filter gebildet sein, welches am Eingang mit den Empfangssignalwerten beaufschlagt wird, die mit der doppelten Symbolrate des Empfangssignals u(t) vorliegen, wobei das digitale nichtrekursive Filter in Kombination mit dem Abtaster 4 am Ausgang Empfangssignalwerte mit der einfachen Symbolrate ausgibt.

Eine Blockschaltbild eines entsprechenden Entzerrers 3 ist beispielhaft in Fig. 2 dargestellt. Wie Fig. 2 entnommen werden kann, umfaßt dieses digitale nichtrekursive Filter 3 mehrere T/2-Verzögerungsglieder 10 sowie in den einzelnen Vorwärtszweigen angeordnete Multiplizierer 11, wobei die Ausgangswerte der einzelnen Vorwärtszweige durch einen Addierer 12 addiert und als Ausgangssignal dem Abtaster 4 zugeführt werden. Die Koeffizienten c₁...cₙ dieser Multiplizierer 11 dürfen sich während einer Datenübertragung nicht ändern und sollten daher fest eingestellt werden. Bei der Dimensionierung dieser Koeffizienten c₁...cₙ können jedoch die Eigenschaften eines bestimmten Übertragungskanals des jeweiligen Duplex-Datenübertragungssystems berücksichtigt werden. Die eigentliche Anpassung an den jeweils aktuellen Übertragungskanal erfolgt, wie bereits erläutert worden ist, durch den adaptiven T-Entzerrer 8, dem die durch den T/2-Entzerrer 3 entzerrten, mit Hilfe der Filter 1 und 5 gefilterten und durch den Echokompensator 6 echokompensierten Empfangssignalwerte zugeführt werden.

### Bezugszeichenliste

- 1: Eingangsfilter
- 2: Abtaster
- 3: T/2-Entzerrer
- 4: Abtaster
- 5: Digitales Filter
- 6: Echokompensator
- 7: Addierer
- 8: Linearer Entzerrer
- 9: Entscheidungsrückkopplungs-Entzerrer
- 10: Verzögerungsglied
- 11: Multiplizierer
- 12: Addierer
- 13: Abtaster
- 14: Verzögerungsglied
- 15: Multiplizierer
- u(t): Empfangssignal
- T: Symbolperiode
- k: Abtastindex
- x(t): Sendesignal
- y'(k·t): Entzerrtes Empfangssignal
- yec(k·t): Echokompensationssignal
- y(k·t): Entzerrtes und echokompensiertes Empfangssignal
- h_{1,1} ...h_{N,2}: Multiplikationskoeffizient
- c₁...cₙ: Multiplikationskoeffizient

## Patentansprüche

1. Verfahren zum Empfangen eines über ein Duplex-Übertragungssystem übertragenen Empfangssignals (u(t)),
wobei ein von einer Duplex-Übertragungseinheit des Duplex-Übertragungssystems empfangenes Empfangssignal (u(t)) mit der doppelten Symbolrate (2/T) des Empfangssignals (u(t)) abgetastet wird,
wobei in einer Echokompensationseinrichtung (6,7) ein Echokompensationssignal (yec(k·T)) in Abhängigkeit von einem Sendesignal (x(k·T)) der Duplex-Übertragungseinheit erzeugt und mit dem abgetasteten Empfangssignal (y'(k·T)) kombiniert wird, um ein echokompensiertes Empfangssignal (y(k·T)) zu erhalten, und
wobei das echokompensierte Empfangssignal (y(k·T)) entzerrt (8,9) und zur weiteren Verarbeitung ausgegeben wird,
**dadurch gekennzeichnet,**
**daß** nach der Abtastung (2) mit der doppelten Symbolrate (2/T) das Empfangssignal (u(t)) entzerrt (3) und das entzerrte Empfangssignal mit der einfachen Symbolrate (1/T) nochmals abgetastet (4) und der Echokompensationseinrichtung (6,7) zugeführt wird.

2. Verfahren nach Anspruch 1,
**dadurch gekennzeichnet,**
**daß** zur Entzerrung des Empfangssignals (u(t)) nach der Abtastung (2) mit der doppelten Symbolrate (2/T) und vor der Abtastung (4) mit der einfachen Symbolrate (1/T) ein nichtrekursives digitales Filter (3) verwendet wird.

3. Verfahren nach Anspruch 2,
**dadurch gekennzeichnet,**
**daß** die Koeffizienten (c₁...cₙ) des nichtrekursiven digitalen Filters (3) während einer Datenübertragung nicht verändert werden.

4. Empfängeranordnung für eine Duplex-Übertragungseinheit,
mit einer ersten Abtasteinrichtung (2) zum Abtasten eines Empfangssignals (u(t)) der Duplex-Übertragungseinheit mit der doppelten Symbolrate (2/T) des Empfangssignals (u(t)),
mit einer Echokompensatoreinrichtung (6,7) zum Erzeugen eines Echokompensationssignals (yec(k·T)) in Abhängigkeit von einem Sendesignal (x(k·T)) der Duplex-Übertragungseinheit, wobei das Echokompensationssignals (yec(k·T)) mit dem von der Abtasteinrichtung (2) abgetasteten Empfangssignal (y'(k·T)) in der Echokompensationseinrichtung (6,7) kombiniert wird, um ein echokompensiertes Empfangssignal (y(k·T)) zu erhalten, und
mit einem ersten Entzerrer (8) zum Entzerren des echokompensierten Empfangssignals und zum Ausgeben des entzerrten und echokompensierten Empfangssignals (y(k·T)) zur weiteren Verarbeitung, ..
**dadurch gekennzeichnet,**
**daß** zwischen der ersten Abtasteinrichtung (2) und der Echokompensationseinrichtung (6,7) ein zweiter Entzerrer (3) angeordnet ist, dem das von der ersten Abtasteinrichtung (2) mit der doppelten Symbolrate (2/T) abgetastete Empfangssignal (u (t)) zur Entzerrung (3) zugeführt wird, und
**daß** eine zweite Abtasteinrichtung (4) vorgesehen ist, um das von dem zweiten Entzerrer (3) entzerrte Empfangssignal (u(t)) mit der einfachen Symbolrate (1/T) abzutasten und der Echokompensationseinrichtung (6,7) zuzuführen.

5. Empfängeranordnung nach Anspruch 4,
**dadurch gekennzeichnet,**
**daß** der zweite Entzerrer (3) ein digitales Filter ist.

6. Empfängeranordnung nach Anspruch 5,
**dadurch gekennzeichnet,**
**daß** der zweite Entzerrer (3) ein nichtrekursives digitales Filter ist.

7. Empfängeranordnung nach Anspruch 6,
**dadurch gekennzeichnet,**
**daß** die Koeffizienten (c₁...cₙ) des zweiten Entzerrers (3) fest eingestellt sind.

8. Empfängeranordnung nach einem der Ansprüche 4-7,
**dadurch gekennzeichnet,**
**daß** das Empfangssignal (u(t)) der ersten Abtasteinrichtung über ein Empfangsfilter (1) zugeführt ist, und
**daß** das von der zweiten Abtasteinrichtung (4) mit der einfachen Symbolrate (1/T) abgetastete und von dem zweiten Entzerrer (3) entzerrte Empfangssignal (y'(k·T)) über ein digitales Hochpaßfilter (5) der Echokompensationseinrichtung (6,7) zugeführt ist.

9. Empfängeranordnung nach einem der Ansprüche 4-8,
**dadurch gekennzeichnet,**
**daß** der erste Entzerrer (8) ein digitales nichtrekursives Filter mit adaptiv einstellbaren Filterkoeffizienten ist, und
**daß** mit dem ersten Entzerrer (8) ein Entscheidungs-Rückkopplungsentzerrer (9) in Reihe geschaltet ist, der das entzerrte und echokompensierte Empfangssignals (y(k·T)) zur weiteren Verarbeitung ausgibt.

10. Verwendung einer Empfängeranordnung nach einem der Ansprüche 4-9 in einem Duplex-Pulsamplitudenmodulations-Übertragungssystem.

## Claims

1. Method for receiving a received signal (u(t)) transmitted via a duplex transmission system,
where a received signal (u(t)) received from a duplex transmission unit in the duplex transmission system is sampled at twice the symbol rate (2/T) of the received signal (u(t)),
where an echo compensation signal (yec(k·T)) is produced in an echo compensation device (6, 7) on the basis of a transmitted signal (x(k·t)) from the duplex transmission unit and is combined with the sampled received signal (y'(k·T)) in order to obtain an echo-compensated received signal (y(k·T)), and
where the echo-compensated received signal (y(k·T)) is equalized (8, 9) and is output for further processing,
**characterized in that**,
after the sampling (2) at twice the symbol rate (2/T), the received signal (u(t)) is equalized (3) and the equalized received signal is sampled again (4) at once the symbol rate (1/T) and is supplied to the echo compensation device (6, 7).

2. Method according to Claim 1,
**characterized in that**
the received signal (u(t)) is equalized using a nonrecursive digital filter (3) after the sampling (2) at twice the symbol rate (2/T) and before the sampling (4) at once the symbol rate (1/T).

3. Method according to Claim 2,
**characterized in that**
the coefficients (c₁.....cₙ) of the nonrecursive digital filter (3) are not altered during data transmission.

4. Receiver arrangement for a duplex transmission unit,
having a first sampling device (2) for sampling a received signal (u(t)) from the duplex transmission unit at twice the symbol rate (2/T) of the received signal (u(t)),
having an echo compensator device (6, 7) for producing an echo compensation signal (yec(k·T)) on the basis of a transmitted signal (x(k·T)) from the duplex transmission unit, with the echo compensation signal (yec(k·T)) being combined in the echo compensation device (6, 7) with the received signal (y'(k·T)) sampled by the sampling device (2) in order to obtain an echo-compensated received signal (y(k·T)), and
having a first equalizer (8) for equalizing the echo-compensated received signal and for outputting the equalized and echo-compensated received signal (y(k·T)) for further processing,
**characterized**
**in that** the first sampling device (2) and the echo compensation device (6, 7) have a second equalizer (3) arranged between them to which the received signal (u(t)) sampled at twice the symbol rate (2/T) by the first sampling device (2) is supplied for equalization (3), and
**in that** a second sampling device (4) is provided in order to sample the received signal (u(t)) equalized by the second equalizer (3) at once the symbol rate (1/T) and to supply it to the echo compensation device (6, 7).

5. Receiver arrangement according to Claim 4,
**characterized**
**in that** the second equalizer (3) is a digital filter.

6. Receiver arrangement according to Claim 5,
**characterized**
**in that** the second equalizer (3) is a nonrecursive digital filter.

7. Receiver arrangement according to Claim 6,
**characterized**
**in that** the coefficients (c₁.....cₙ) of the second equalizer (3) are set permanently.

8. Receiver arrangement according to one of Claims 4-7 ,
**characterized**
**in that** the received signal (u(t)) is supplied to the first sampling device via a reception filter (1), and
**in that** the received signal (y'(k·T)) sampled at once the symbol rate (1/T) by the second sampling device (4) and equalized by the second equalizer (3) is supplied to the echo compensation device (6, 7) via a digital high-pass filter (5).

9. Receiver arrangement according to one of Claims 4-8,
**characterized**
**in that** the first equalizer (8) is a digital nonrecursive filter with adaptively settable filter coefficients, and
**in that** the first equalizer (8) has a decision feedback equalizer (9) connected in series with it which outputs the equalized and echo-compensated received signal (y(k·T)) for further processing.

10. Use of a receiver arrangement according to one of Claims 4-9 in a duplex pulse amplitude modulation transmission system.

## Revendications

1. Procédé de réception d'un signal de réception (u(t)) par un système de transmission duplex, sur lequel un signal de réception (u(t)) reçu par une unité de transmission duplex du système de transmission duplex est analysée au débit numérique du signal de réception (u(t)) multiplié par deux (2/T),
un signal de compensation de l'écho (y'(k.T)) étant produit dans un équipement de compensation d'écho (6, 7) en fonction d'un signal d'émission (x(k.T)) de l'unité de transmission duplex, et combiné au signal de réception analysé( y(k.T)) pour obtenir un signal de réception compensé (y(k.T)),
le signal compensé (y(k.T)) étant égalisé (8, 9) et émis pour traitement ultérieur,
**caractérisé en ce que**, après l'analyse (2) au débit numérique multiplié par deux (2/T), le signal de réception (u(t))est égalisé (3), et le signal de réception égalisé est analysé (4) une nouvelle fois au débit numérique simple (1/T) et délivré à l'équipement de compensation d'écho (6, 7).

2. Procédé selon la revendication 1, **caractérisé en ce que**, un filtre numérique non récursif (3) est utilisé pour l'égalisation du signal de réception (u(t)) après l'analyse (2) au débit numérique multiplié par deux (2/T) et avant l'analyse (4) au débit numérique simple (1/T).

3. Procédé selon la revendication 2, **caractérisé en ce que**, les coefficients (c₁...cₙ) du filtre numérique non récursif (3) ne changent pas pendant une transmission de données.

4. Dispositif récepteur pour une unité de transmission duplex, comportant un premier équipement d'analyse (2) pour l'analyse d'un signal d'entrée (u(t)) de l'unité de transmission duplex au débit numérique du signal de réception (u(t)) multiplié par deux (2/T),
comportant un équipement de compensation d'écho (6, 7) pour la production d'un signal de compensation d'écho (yec(k.T)) en fonction d'un signal d'émission (x(k.T)) de l'unité de transmission duplex, le signal de compensation d'écho (yec(k.T)) étant combiné dans l'équipement de compensation d'écho au signal de réception (y'(k.T)) analysé par l'équipement d'analyse (2) pour obtenir un signal de réception compensé (y(k.T)) et,
comportant un premier égaliseur (8) pour l'égalisation du signal de réception compensé et pour l'émission du signal de réception égalisé et compensé (y(k.T)) pour traitement ultérieur,
**caractérisé en ce que**, entre le premier équipement d'analyse (2) et l'équipement de compensation d'écho (6, 7) est disposé un second égaliseur (3) auquel est délivré pour égalisation (3) le signal de réception analysé par le premier équipement d'analyse (2) au débit numérique multiplié par deux (2/T), et **en ce qu'**un second équipement d'analyse (4) est prévu pour analyser au débit numérique simple (1/T)le signal de réception (u(t)) égalisé par le second égaliseur (3) et l'amener à l'équipement de compensation d'écho.

5. Dispositif récepteur selon la revendication 4, **caractérisé en ce que** le second égaliseur (3) est un filtre numérique.

6. Dispositif récepteur selon la revendication 5, **caractérisé en ce que** le second égaliseur (3) est un filtre numérique incursif.

7. Dispositif récepteur selon la revendication 6, **caractérisé en ce que** les coefficients (c1.....cn) du second égaliseur (3) sont déterminés de manière fixe.

8. Dispositif récepteur selon la revendication l'une quelconque des revendications 4 à 7, **caractérisé en ce que** le signal de réception (u(t)) du premier équipement d'analyse est délivré au premier équipement d'analyse par l'intermédiaire d'un filtre de réception (1), et **en ce que** le signal de réception (y'(k.T)) analysé par le deuxième équipement d'analyse (4) au débit numérique simple (1/T) et égalisé par le second égaliseur (3) est délivré à l'équipement de compensation d'écho (6, 7) par l'intermédiaire d'un filtre passe-haut numérique (5).

9. Dispositif récepteur selon l'une quelconque des revendications 4 à 8 **caractérisé en ce que** le premier égaliseur (8) est un filtre numérique non récursif ayant des coefficient de filtrages ajustables de façon adaptative, et **en ce qu'**avec avec le premier égaliseur (8) est monté en série un égaliseur à retour de décision (9) qui émet pour traitement ultérieur le signal de réception égalisé et compensé (y(k.T)).

10. Utilisation d'un dispositif récepteur selon l'une quelconque des revendications 4 à 9 dans un système de transmission duplex à modulation d'impulsions en amplitude.
